# EUROPÄISCHE PATENTSCHRIFT

(11) **EP 2 252 562 B1**
(45) Veröffentlichungstag und Bekanntmachung des Hinweises auf die Patenterteilung: **14.09.2016**
(21) Anmeldenummer: 09721735.0
(22) Anmeldetag: 20.01.2009
(51) Int. Cl.: C01B 31/34, C01B 31/36, C04B 35/56, C04B 35/565, C23C 4/10, F16J 9/26, C01B 31/30, C23C 4/129

(54) **VERFAHREN UND VORRICHTUNG ZUR HERSTELLUNG EINES DISPERSIONSGEHÄRTETEN GEGENSTANDES DER CARBID-NANOPARTIKEL ENTHÄLT**
METHOD AND DEVICE FOR PRODUCING A DISPERSION-HARDENED OBJECT THAT CONTAINS CARBIDE NANOPARTICLES
PROCÉDÉ ET DISPOSITIF DE FABRICATION D'UN OBJET DURCI PAR DISPERSION CONTENANT DES NANOPARTICULES DE CARBURE

(30) Priorität: 18.03.2008 DE 102008014800
(43) Veröffentlichungstag der Anmeldung: 24.11.2010
(73) Patentinhaber: Federal-Mogul Burscheid GmbH, 51399 Burscheid (DE)
(72) Erfinder: ZINNABOLD, Michael, 51399 Burscheid (DE); MATZ, Marc-Manuel, 86316 Friedberg (DE); KENNEDY, Marcus, 40479 Düsseldorf (DE)
(74) Vertreter: Becker Kurig Straus
(86) Internationale Anmeldenummer: PCT/EP2009/000325
(87) Internationale Veröffentlichungsnummer: WO 2009/115156

(56) Entgegenhaltungen:
- EP-A- 1 559 807
- EP-A2- 1 679 088
- DE-A1- 10 057 953
- DE-C1- 19 708 402
- JP-A- 2001 172 756
- JP-A- 2001 181 817

## Beschreibung

Die vorliegende Erfindung betrifft ein Verfahren und eine Vorrichtung zur Herstellung eines dispersionsgehärteten Gegenstandes, der Carbid-Nanopartikel enthält, wie beispielsweise ein Bauteil für eine Verbrennungskraftmaschine, vorzugsweise einen Kolbenring.

Bei Kolbenringen, wie beispielsweise denen von Hubkolben-Verbrennungskraftmaschinen, muss eine hohe Verschleißfestigkeit gewährleistet sein, da anderenfalls, d.h. bei einer geringen Verschleißfestigkeit die Schicht dünner wird. Dadurch nimmt die Wandstärke des Kolbenrings ab, die Abdichtwirkung wird schlechter, Gasleckage und der Ölverbrauch nehmen zu und die Leistung des Motors kann sich verschlechtern. Durch einen sich abreibenden Kolbenring wird der Spalt zwischen Zylinderwand und Kolbenring immer größer, so dass Verbrennungsgase leichter am Kolbenring vorbei austreten können (so genanntes Blow-By), was die Effizienz des Motors verringert. Durch einen vergrößerten Spalt wird weiterhin der im Verbrennungsraum zurückbleibende nicht abgestreifte Ölfilm dicker, so dass mehr Öl pro Zeiteinheit verloren gehen kann, also der Ölverbrauch erhöht wird.

Im Bereich des thermischen Spritzens von Kolbenringen werden heutzutage bevorzugt Molybdän-basierte Werkstoffe mittels des Plasmaspritzverfahrens eingesetzt. Diese haben bei hochbelasteten Motoren allerdings eine zu hohe Verschleißrate.

Die Hochgeschwindigkeitsflammspritztechnologie (HVOF) bietet die Möglichkeit, Partikel mit einer geringen thermischen Einwirkung und einer hohen kinetischen Energie so auf einem Substrat abzuscheiden, dass dichte Schichten mit einer hohen Haftfestigkeit erzeugt werden. Um darüber hinaus einen verbesserten Verschleißwiderstand bei höheren Belastungen zu gewährleisten, wurden in neuerer Zeit Partikel aus Metallcarbiden, wie beispielsweise WC oder Cr₃C₂ verwendet, die mittels eines Plasmaspritzverfahrens nicht gespritzt werden können, da sie sich bei den sehr hohen Plasmatemperaturen von bis 20000°C zersetzen oder sehr spröde Phasen, wie beispielsweise W₂C bilden. Diese Partikel bieten tatsächlich einen höheren Verschleißwiderstand, haben aber auf Grund Ihrer, gegenüber dem Substrat unterschiedlichen physikalischen Eigenschaften, wie geringerem thermischen Ausdehnungskoeffizienten und niedrigerer Wärmeleitfähigkeit, sowie unterschiedlichen mechanischen Eigenschaften, wie geringerer Duktilität, d.h. höherer Sprödigkeit und geringerer Bruchzähigkeit Nachteile. Diese Nachteile wirken sich im Motorbetrieb, insbesondere im Bereich der Mischreibung oder der Mangelschmierung aus. Während dieser Zustände führt die während der Reibung zusätzlich induzierte thermische Energie zu einem Relaxationsprozess, bei dem die Kolbenringschicht aufgrund der stark abweichenden thermischen Ausdehungskoeffizienten nicht der Ausdehnung des Substrats folgen kann und demzufolge ein Rissnetzwerk an der Lauffläche entsteht. Dieser Effekt führt letztlich zum Versagen bei wiederholter Belastung. Zudem werden die Metallcarbide üblicherweise in eine metallische Matrix, wie beispielsweise NiCr-Legierung, eingebracht wobei es nur zu einer Benetzung der Legierungsoberfläche, nicht aber zu einer metallurgischen Verklammerung kommt. Dadurch ist die Haftung der Metallcarbide, wie WC oder Cr₃C₂, die als Hartstoffbereiche einen hohen Verschleißwiderstand liefern, begrenzt.

Um die Festigkeit eines Materials zu steigern, kann unter anderem eine so genannte Dispersionshärtung durchgeführt werden. Die dabei vorhandenen Partikel bilden Hindernisse für Versetzungsbewegungen innerhalb des Materials bei mechanischer Beanspruchung. Die bei der Beanspruchung entstehenden und vorhandenen Versetzungen können nicht durch die Partikel hindurch schneiden, vielmehr müssen sie sich zwischen den Partikeln auswölben. Es bilden sich Versetzungsringe, die wiederum umgangen werden müssen. Beim Umgehen ist ein höherer Energieeintrag als beim Schneiden notwendig. Die Fließspannung für das Wandern der Versetzung nimmt mit abnehmendem Teilchenabstand und abnehmender Teilchengröße zu. Demzufolge steigt auch die Materialfestigkeit.

Eine Dispersionshärtung wäre durch Einbringung von Carbiden in Form von Nanopartikeln möglich. Der Begriff "Nanopartikel" bezieht sich hierbei auf Partikel mit einer Größe von 1 bis 200 nm. Die Herstellung nanokristalliner thermischer Spritzschichten ist bisher allerdings nur mittels agglomerierter Nanopartikel durchgeführt worden. Solche Agglomerate von Nanopartikeln können einen Durchmesser von 0,1 bis 100 µm erreichen. Erst bei Partikelgrößen größer 1-2µm wird der der Partikeltransport unter Normaldruckbedingungen möglich. Auf Grund der Tatsache, dass Nanopartikel für einen gerichteten Transport in einem Gasstrom einen Mindestenergiebetrag durch den Zusammenstoß mit den Gasmolekülen aufnehmen müssen und die maximal aufzunehmende Energie mit kleiner werdender Partikelgröße abnimmt, können die Nanopartikel nur bis zu einer Mindestgröße gerichtet transportiert werden. Dies wäre nur durch niedrigere Prozessdrücke oder durch eine elektrische Aufladung der Partikel möglich. Insbesondere bei Partikelgrößen unter 800nm verhalten sich Partikel wie Gasmoleküle. Eine nanokristalline HVOF-Schicht ist demnach bis heute nur dann herstellbar, wenn agglomerierte nanokristalline Pulver zur Verfügung stehen. Eine Partikelverstärkung müsste demnach bereits im Pulver durchgeführt werden. Dies führt dazu, dass die entstandene Beschichtung Mikropartikel und Agglomerate aus Nanopartikeln, jedoch keine fein dispers verteilten diskreten Nanopartikel enthält. Beschichtungen die Agglomerate von Nanopartikeln enthalten, werden beispielsweise in der DE 10 2007 018 859 A1, der DE 100 57 953 A1, der US 5,939,146 A, der US 6,723,387 B1 und der US 2004/0131865 A1 beschrieben.

DE10057953A1 zeigt das Aufspritzen eines Mischnanopulvers mittels HVOF. Das Mischnanopulver wird durch mischen von nanoskaligem Al2O3- und SiC-Pulver hergestellt. Dieses Pulver kann agglomeriert werden.

DE1679088A2 zeigt die Herstellung von Agglomeraten aus Nanoteilchen mit einer Größe im Mikrometerbereich. Diese Agglomerate werden für HVOF verwendet. Diese Nanoteilchen können ein Karbidmaterial sein. Die Agglomeraten werden durch Sprühtrocknen hergestellt.

Daher stellt sich die Aufgabe, ein Verfahren bereitzustellen, welches die Herstellung eines dispersionsgehärteten Gegenstandes, insbesondere eines Kolbenrings, ermöglicht, der diskrete Carbid-Nanopartikel enthält.

Diese Aufgabe wird erfindungsgemäß durch ein Verfahren gelöst, welches das Herstellen eines Gegenstandes mittels eines thermischen Spritzverfahrens umfasst, wobei dem Gasstrom hinter der Brennkammer mit Hilfe eines Trägergases mindestens ein Carbid-Nanopartikel-Precursor zugeführt wird, der im Gasstrom zu einem Carbid reagiert. Erfindungsgemäß erfolgt also eine Dispersionsverfestigung mittels Nanopartikeln aus der Gasphase, wobei die Nanopartikel erst in der Gasphase hergestellt werden und anschließend mit mikrokristallinen Partikeln eines Spritzpulvers koagulieren, und demzufolge der Weitertransport der Mikro-Nanopartikel Agglomerate mit den herkömmlichen Parametern gewährleistet ist. Bei dem Trägergas handelt es sich vorzugsweise um ein chemisch inertes Gas. Chemisch inerte Gase umfassen beispielsweise Edelgase oder Stickstoff. Vorzugsweise wird Stickstoff verwendet.

Als Carbid-Nanopartikel-Precursor wird bevorzugt ein Übergangsmetallhalogenid verwendet. Besonders bevorzugt sind die kostengünstigen Übergangsmetallchloride, wie beispielsweise WCl₆. Es können auch Elemente wie Si, V, W oder Titan verwendet werden, die in einem externen Reaktor verdampft und in einer C-haltigen Atmosphäre zu entsprechenden Carbiden reagieren.

Die thermische Energie innerhalb der thermischen Spritzvorrichtung oder eines externen thermisch beanspruchten Nanopartikelgenerators (z.B. ein Rohrofen) wird ausgenutzt, um das Precursormaterial bzw. Ausgangsmaterial gezielt zu zersetzen und so den gewünschten Werkstoff als Nanopartikel in der Gasphase zu erhalten. Als thermisches Spritzverfahren ist Hochgeschwindigkeitsflammspritzen (HVOF) bevorzugt. Die Verwendung eines externen Nanopartikelgenerators ermöglicht die Herstellung von Nanopartikel-verstärkten Schichtsystemen und damit Bauteilen, wie beispielsweise eines Kolbenrings.

Es kann auch eine chemische Reaktion des Carbid-Nanopartikel-Precursors mit einem weiteren Gas erfolgen. Hierbei kann es sich um das Brenngas handelt, oder um ein Gas, welches dem Trägergas beigemischt wird. Als Kohlenstoffquelle bietet sich ein gasförmiger Kohlenwasserstoff, wie beispielsweise Methan an. Als Reduktionsmittel kann beispielsweise Wasserstoff zugesetzt werden. Eine beispielhafte Reaktion ist in Formel 1 dargestellt.

WCl₆ + CH₄ + H₂ → WC + 6HCl (1)

Es können aber auch in einem externen Reaktor Metalle verdampft werden, z.B. Wolfram, Titan oder Vanadium mittels eines Lichtbogens zwischen zwei Kohlenstoffelektroden, wodurch WC enstehen würde.

Bei dem Gegenstand, der durch das Verfahren hergestellt wird, handelt es sich bevorzugt um ein Bauteil für eine Verbrennungskraftmaschine, besonders bevorzugt um einen Kolbenring.

Schließlich betrifft die vorliegende Erfindung auch eine Vorrichtung zur Durchführung des erfindungsgemäßen Verfahrens. Bei dieser handelt es sich um eine thermische Spritzvorrichtung, die hinter der Brennkammer neben mindestens einer Leitung zur Zuführung eines thermischen Spritzpulvers weiterhin mindestens eine Leitung zur Zuführung eines Carbid-Nanopartikel-Precursor oder Nanopartikel, die mittels eines externen Reaktors hergestellt wurden, mittels eines Trägergases umfasst. Die Leitung zur Zuführung eines Carbid-Nanopartikel-Precursor mittels eines Trägergases besteht bevorzugt aus Graphit, welches den hohen Temperaturen des thermischen Spritzstrahls widerstehen kann. Insbesondere handelt es sich bei der Vorrichtung bevorzugt um eine Vorrichtung zum Hochgeschwindigkeitsflammspritzen (HVOF).

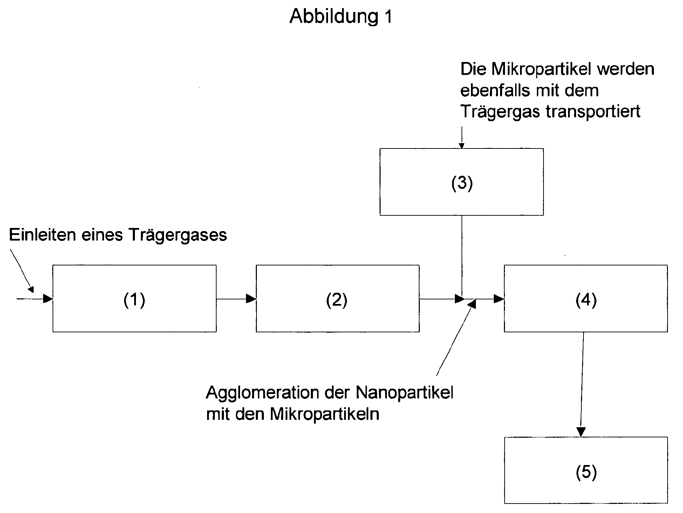

Die Abb. 1 zeigt eine schematische Darstellung zur Herstellung Nanopartikel-verstärkter Schichten mittels thermischen Spritzens und einem externen Nanopartikelgenerator. Die Herstellung von Nanopartikel -verstärkten Schichtsystemen mittels HVOF-Spritzen ist beispielsweise durch die Bereitstellung von Nanopartikeln in einem externen Reaktor (1) möglich in dem ein Material kontrolliert verdampft wird (vgl. Abb. 1). Die dabei entstehenden Nanopartikel werdenin einem zweiten Ofen (2) zur gezielten Einstellung der Partikelform im Gasstrom gesintert und agglomerieren mit den Mikropartikeln in dem Gasstrom kurz bevor diese in die Spritzpistole (4) eingeführt werden. Die Leitung, in der der Nanopartikel über ein Trägergas transportiert werden können, kann einfach mit der Leitung verbunden werden, in welcher die Mikropartikel transportiert werden, beispielsweise mittels eines T-Stücks. (3) bezeichnet einen Pulverförderer. Das erhaltene Substrat ist mit (5) bezeichnet.

## Patentansprüche

1. Verfahren zur Herstellung eines dispersionsgehärteten Gegenstandes, insbesondere eines Kolbenrings, der Carbid-Nanopartikel mit einer Größe im Bereich von 1 bis 200 nm enthält, umfassend das Herstellen des Gegenstandes mittels eines thermischen Spritzverfahrens, **dadurch gekennzeichnet, dass** das thermischen Spritzverfahren umfasst:
(i) Zuführen mindestens eines Carbid-Nanopartikel-Precursors oder extern hergestellter Nanopartikel in den Gasstrom hinter der Brennkammer mit Hilfe eines Trägergases, wobei der mindestens eine Carbid-Nanopartikel-Precursor oder die extern hergestellten Nanopartikel in dem Gasstrom zu einem Carbid reagieren oder bereits als Carbide zugeführt werden, und
(ii) Koagulieren der Carbid-Nanopartikel mit mikrokristallinen Partikeln eines Spritzpulvers in dem Gasstrom, bevor die Carbid-Nanopartikel und das Spritzpulver in eine Spritzpistole überführt werden.

2. Verfahren nach Anspruch 1, **dadurch gekennzeichnet, dass** es sich bei dem Carbid-Nanopartikel-Precursor um ein Übergangsmetallhalogenid handelt.

3. Verfahren nach Anspruch 2, **dadurch gekennzeichnet, dass** es sich bei dem Carbid-Nanopartikel-Precursor um ein Übergangsmetallchlorid handelt.

4. Verfahren nach Anspruch 3, **dadurch gekennzeichnet, dass** es sich bei dem Carbid-Nanopartikel-Precursor um WCl₆ handelt.

5. Verfahren nach einem der vorhergehenden Ansprüche, **dadurch gekennzeichnet, dass** die Carbid-Nanopartikel, hergestellt aus einem externen thermisch betriebenen Reaktor, in die Spritzkammer eingeführt werden.

6. Verfahren nach einem der vorhergehenden Ansprüche, **dadurch gekennzeichnet, dass** die Carbid-Nanopartikel, hergestellt aus einem externen thermisch betriebenen Reaktor, aus SiC, TiC, WC oder VC bestehen.

7. Verfahren nach einem der vorhergehenden Ansprüche, **dadurch gekennzeichnet, dass** es sich bei dem thermischen Spritzverfahren um Hochgeschwindigkeitsflammspritzen (HVOF) handelt.

8. Verfahren nach einem der vorhergehenden Ansprüche, **dadurch gekennzeichnet, dass** das Trägergas einen Kohlenwasserstoff, insbesondere Methan, enthält.

9. Verfahren nach einem der vorhergehenden Ansprüche, **dadurch gekennzeichnet, dass** das Trägergas Wasserstoff enthält.

10. Verwendung des Verfahrens nach einem der vorhergehenden Ansprüche zur Herstellung eines dispersionsgehärteten Gegenstandes, der Carbid-Nanopartikel enthält.

11. Verwendung nach Anspruch 10, **dadurch gekennzeichnet, dass** es sich bei dem dispersionsgehärteten Gegenstand um ein Bauteil für eine Verbrennungskraftmaschine handelt.

12. Verwendung nach Anspruch 10, **dadurch gekennzeichnet, dass** es sich bei dem dispersionsgehärteten Gegenstand um einen Kolbenring handelt.

13. Vorrichtung zur Durchführung eines Verfahrens nach einem der Ansprüche 1 bis 9, **dadurch gekennzeichnet, dass** es sich um eine thermische Spritzvorrichtung handelt, die hinter der Brennkammer neben mindestens einer Leitung zur Zuführung eines thermischen Spritzpulvers mit mikrokristallinen Partikeln weiterhin mindestens eine Leitung zur Zuführung eines Carbid-Nanopartikel-Precursors oder extern hergestellter Nanopartikel mittels eines Trägergases umfasst.

14. Vorrichtung nach Anspruch 13, **dadurch gekennzeichnet, dass** diese mindestens eine Leitung zur Zuführung eines Carbid-Nanopartikel-Precursors mittels eines Trägergases aus Graphit besteht.

15. Vorrichtung nach Anspruch nach einem der Ansprüche 13 oder 14, **dadurch gekennzeichnet dass** es sich um eine Vorrichtung zum Hochgeschwindigkeits-Flammspritzen (HVOF) handelt.

## Claims

1. A method for producing a dispersion-hardened object, in particular a piston ring, which contains carbide nanoparticles of a size in the range from I to 200 nm, comprising producing the object by means of a thermal spraying method, **characterized in that** the thermal spraying method comprises:
(i) supplying at least one carbide nanoparticle precursor or externally produced nanoparticles to the gas flow downstream of the combustion chamber by means of a carrier gas, wherein the at least one carbide nanoparticle precursor or the externally produced nanoparticles react in the gas flow to form a carbide or are already supplied in the form of carbides, and
(ii) coagulating of the carbide nanoparticles with microcrystalline particles of a spray powder in the gas flow before the carbide nanoparticles and the spray powder are conveyed into a spray gun.

2. The method according to claim 1, **characterized in that** the carbide nanoparticle precursor is a transition metal halogenide.

3. The method according to claim 2, **characterized in that** the carbide nanoparticle precursor is a transition metal chloride.

4. The method according to claim 3, **characterized in that** the carbide nanoparticle precursor is WCl₆.

5. The method according to any one of the preceding claims, **characterized in that** the carbide nanoparticles produced from an external, thermally operated reactor are fed into the spray chamber.

6. The method according to any one of the preceding claims, **characterized in that** the carbide nanoparticles produced from an external, thermally operated reactor consist of SiC, TiC, WC, or VC.

7. The method according to any one of the preceding claims, **characterized in that** the thermal spraying method is high velocity oxygen fuel thermal spraying (HVOF).

8. The method according to any one of the preceding claims, **characterized in that** the carrier gas contains a hydrocarbon, in particular methane.

9. The method according to any one of the preceding claims, **characterized in that** the carrier gas contains hydrogen.

10. A use of the method according to any one of the preceding claims for production of a dispersion-hardened object which contains carbide nanoparticules.

11. The use according to claim 10, **characterized in that** the dispersion-hardened object is a component for an internal combustion engine.

12. The use according to claim 10, **characterized in that** the dispersion-hardened object is a piston ring.

13. A device for carrying out a method according to any one of the claims 1 to 9, **characterized in that** it is a thermal spraying device which, downstream of the combustion chamber, besides at least one line for supplying a thermal spray powder with microcrystalline particles, comprises further at least one line for supplying a carbide nanoparticle precursor or externally produced nanoparticles by means of a carrier gas.

14. The device according to claim 13, **characterized in that** said at least one line for supplying a carbide nanoparticle precursor by means of a carrier gas consists of graphite.

15. The device according to one of the claims 13 or 14, **characterized in that** it is a device for high velocity oxygen fuel thermal spraying (HVOF).

## Revendications

1. Procédé de fabrication d'un objet durci par dispersion, en particulier un segment de piston, contenant des nanoparticules de carbure d'une taille se situant dans la gamme de 1 à 200 nm, comprenant la fabrication de l'objet au moyen d'un procédé d'injection thermique, **caractérisé en ce que** le procédé d'injection thermique comprend :
(i) l'introduction d'au moins un précurseur de nanoparticules de carbure ou de nanoparticules fabriquées extérieurement dans le flux de gaz derrière la chambre de combustion à l'aide d'un gaz porteur, au moins un précurseur de nanoparticules de carbure ou les nanoparticules fabriquées extérieurement réagissant dans le flux de gaz pour former un carbure ou étant déjà introduites en tant que carbure, et
(ii) la coagulation des nanoparticules de carbure avec des particules microcristallines d'une poudre d'injection, dans le flux de gaz, avant que les nanoparticules de carbure et la poudre d'injection ne soient transférées dans un pistolet-pulvérisateur.

2. Procédé selon la revendication 1, **caractérisé en ce que** concernant le précurseur de nanoparticules de carbone, il s'agit d'un halogénure métallique transitoire.

3. Procédé selon la revendication 2, **caractérisé en ce que** concernant le précurseur de nanoparticules de carbone, il s'agit d'un chlorure métallique transitoire.

4. Procédé selon la revendication 3, **caractérisé en ce que** concernant le précurseur de nanoparticules de carbone, il s'agit de WCl₆.

5. Procédé selon l'une quelconque des revendications précédentes, **caractérisé en ce que** les nanoparticules de carbure, élaborées à partir d'un réacteur externe à entraînement thermique, sont introduites dans la chambre d'injection.

6. Procédé selon l'une quelconque des revendications précédentes, **caractérisé en ce que** les nanoparticules de carburé élaborées à partir d'un réacteur externe à entraînement thermique, sont composées de SiC, TiC, WC ou VC.

7. Procédé selon l'une quelconque des revendications précédentes, **caractérisé en ce que** concernant le procédé d'injection thermique, il s'agit de projection à la flamme à haute vitesse (PFHV).

8. Procédé selon l'une quelconque des revendications précédentes, **caractérisé en ce que** le gaz porteur contient un hydrocarbure, en particulier du méthane.

9. Procédé selon l'une quelconque des revendications précédentes, **caractérisé en ce que** le gaz porteur contient de l'hydrogène.

10. Utilisation du procédé selon l'une quelconque des revendications précédentes pour la fabrication d'un objet durci par dispersion, qui contient des nanoparticules de carbure.

11. Utilisation selon la revendication 10, **caractérisée en ce que** concernant l'objet durci par dispersion, il s'agit d'un composant pour un moteur à combustion interne.

12. Utilisation selon la revendication 10, **caractérisée en ce que** concernant l'objet durci par dispersion, il s'agit d'un segment de piston.

13. Dispositif pour exécuter un procédé selon l'une quelconque des revendications 1 à 9, **caractérisé en ce qu'**il s'agit d'un dispositif d'injection thermique, qui derrière la chambre de combustion, en plus d'au moins une conduite destiné à acheminer une poudre d'injection thermique avec des particules microcristallines, comprend également au moins une conduite destinée à acheminer un précurseur de nanoparticules de carbure ou des nanoparticules élaborées extérieurement au moyen d'un gaz porteur.

14. Dispositif selon la revendication 13, **caractérisé en ce qu'**au moins cette conduite destinée à acheminer un précurseur de nanoparticules de carbure au moyen d'un gaz porteur est composée de graphite.

15. Dispositif selon l'une quelconque des revendications 13 ou 14, **caractérisé en ce qu'**il s'agit d'un dispositif de projection à la flamme à haute vitesse (PFHV).
